# FASCICULE DE BREVET EUROPEEN

(11) **EP 3 681 844 B1**
(45) Date de publication et mention de la délivrance du brevet: **05.11.2025**
(21) Numéro de dépôt: 18765466.0
(22) Date de dépôt: 13.09.2018
(51) Int. Cl.: C02F 3/30, C02F 3/12, B01D 21/32

(54) **REACTEUR ET PROCEDE DE TRAITEMENT BIOLOGIQUE DES EAUX RESIDUAIRES**
REAKTOR UND VERFAHREN ZUR BIOLOGISCHEN ABWASSERBEHANDLUNG
REACTOR AND METHOD FOR BIOLOGICAL TREATMENT OF WASTEWATER

(30) Priorité: 14.09.2017 FR 1758519
(43) Date de publication de la demande: 22.07.2020
(73) Titulaire: Suez International, 92800 Puteaux (FR)
(72) Inventeur: GINESTET, Philippe, Chateaufort 78117 (FR)
(74) Mandataire: LLR
(86) Numéro de dépôt international: PCT/EP2018/074720
(87) Numéro de publication internationale: WO 2019/053114

(56) Documents cités:
- JP-A- 2011 047 760
- JP-A- H10 323 507
- US-A- 5 490 920
- US-A1- 2010 149 539

## Description

### DOMAINE TECHNIQUE DE L'INVENTION

La présente invention s'inscrit dans le domaine de l'épuration des eaux résiduaires, plus particulièrement dans le domaine du traitement biologique des eaux résiduaires, c'est-à-dire un traitement mettant en œuvre un système de boues activées, connu dans la littérature anglo-saxonne sous le nom de « activated sludge system ».

Le procédé par boues activées reproduit industriellement l'effet auto-réparateur des rivières, selon le mécanisme simplifié suivant :

Pollution + Micro-organismes + O₂ -> Micro-organismes + H₂O + CO₂

La boue activée est une boue comprenant des micro-organismes et elle est donc le plus souvent issue du traitement d'eau résiduaire. Elle est constituée essentiellement de bactéries. Les bactéries sont principalement responsables de l'élimination de la pollution de l'eau résiduaire.

La boue activée se présente le plus généralement sous la forme de particules floculées de différentes tailles et présentant des caractéristiques variées, et dans certaines applications elle se présente notamment sous forme de granules de boue (on parle aussi de particules de biomasse et de granules de biomasse).

En particulier, l'invention vise à améliorer l'efficacité desdites boues activées par une sélection des boues selon leur aptitude à décanter.

### ETAT DE LA TECHNIQUE

Les systèmes de boues activées visent à éliminer les pollutions carbonées, azotées et phosphorées des eaux résiduaires.

### Pollution carbonée

Les bactéries présentent dans les boues activées vont chercher dans le milieu à traiter, typiquement les effluents à traiter, les substances indispensables au maintien du rythme de ses activités.

La culture bactérienne que contiennent ces boues comprennent des cellules autotrophes qui sont capables de transformer l'eau, le gaz carbonique et les sels minéraux en leur propre substance en prenant l'énergie nécessaire dans le milieu extérieur et en synthétisant ainsi des réserves utilisables à n'importe quel moment constituant une énergie potentielle accumulée et des cellules hétérotrophes qui au contraire sont incapables d'effectuer cette synthèse et utilisent des substances nutritives qu'elles oxydent en matériaux plus simples. L'énergie ainsi libérée est utilisée directement aux besoins de la cellule. Il s'agit dans ce cas de dégrader les substances nutritives, appelées aussi substrats nutritifs, et d'utiliser l'énergie ainsi dégagée.

Pour l'élimination du carbone dans les effluents, les cellules hétérotrophes sont utilisées par voie aérobie, car l'oxygène est associé aux réactions de dégradation. Le carbone organique se retrouve sous forme de CO2 et de biomasse.

D'une façon générale, il est possible de schématiser la dégradation du glucose par exemple selon l'équation suivante : C₆H₁₂O₆ 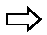 6CO₂ + 6H₂O + 650 cal/mol

Les principaux substrats nutritifs de ces bactéries sont les protides, les glucides, les lipides mais elles peuvent s'adapter à la consommation d'autres substrats organiques tels que alcools, phénols aldéhydes, hydrocarbures...

Une culture bactérienne passe par différentes phases de croissance et de décroissance. Les micro-organismes s'adaptent au milieu nutritif dans une phase de latence : la vitesse de croissance est alors nulle ou faiblement positive. Lorsque le taux de reproduction cellulaire atteint son maximum en présence d'une concentration non limitante en substrat, on parle de croissance exponentielle. Celle-ci sera stoppée par une diminution de la concentration du substrat nutritif qui diminue la vitesse de croissance, l'annule et la fait même régresser au cours d'une phase ralentie. L'absence de matière nutritive provoque une diminution de la masse des micro-organismes.

Pour assurer l'élimination de la pollution carbonée, il faut donc une culture bactérienne riche en cellules hétérotrophes et bien oxygénée. Mais la croissance bactérienne nécessite la présence d'autres éléments nutritifs en particuliers l'azote et le phosphore contenus dans les effluents et dont l'élimination est également nécessaire.

### Pollution azotée

Les eaux résiduaires contiennent également différents composés azotés : protéines, urée et produits de décomposition ainsi que de l'azote sous forme minérale. L'élimination biologique de ces composés se réalise en deux étapes qui sont chronologiquement la nitrification et la dénitrification.

La nitrification consiste en l'oxydation de l'azote organique sous forme d'un ammoniac (NH⁺₄) en nitrite (NO⁻₂) puis en nitrate (NO⁻₃) par l'intermédiaire de cellules autotrophes, selon les équations suivantes :

NH⁺₄ 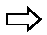 NO⁻₂ 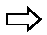 NO⁻₃

Le taux de croissance des bactéries autotrophes est moins rapide que celui des bactéries hétérotrophes. La nitrification peut également se faire en phase aérobie avec des bactéries hétérotrophes selon l'équation suivante :

NH₄⁺ + 2O₂ 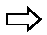 NO⁻₃ + 2H⁺ + H₂O

La dénitrification est un processus dans lequel les cellules hétérotrophes réduisent l'azote nitrique en un état plus faible d'oxydation. Elle est réalisée en phase anaérobie/anoxie selon l'équation suivante :

NO⁻₃ + 6H⁺ + 5e⁻ 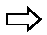 ½ N₂ + 3 H₂O

### Pollution en phosphore

L'élimination du phosphore est une activité également très importante, notamment du fait de la prolifération des algues qu'ils génèrent à la surface de l'eau limitant considérablement les échanges avec l'air et l'énergie solaire, et contribuant ainsi à l'eutrophisation des eaux.

Or, le phosphore intervient principalement dans les mécanismes de stockage ou de libération de l'énergie, les recherches sur la possibilité d'effectuer une déphosphatation biologique ont mis en évidence que des boues activées non aérées relarguaient du phosphore et que dès que la concentration en oxygène remontait, elles le réabsorbaient. Ce sont certaines bactéries spécifiques dites PAO (phosphorus accumulating organisms) qui sont à l'origine de ce phénomène.

La déphosphatation biologique exploite ce phénomène complexe et met en œuvre les bactéries PAO. L'idée de la déphosphatation biologique est de fournir aux PAO les conditions optimales pour promouvoir leur croissance par rapport aux autres organismes. La déphosphatation biologique est ainsi basée sur les observations suivantes :
- les PAO sont capables de stocker le phosphore sous forme de polyphosphates au sein de leurs cellules ;
- en conditions anaérobies et/ou anoxies, les PAO assimilent des produits de fermentation (acétate, ou acides gras par exemple stockés sous la forme de macromolécules intracellulaires telle que le polyhydroxybutyrate PHB) en utilisant l'énergie des polyphosphates stockés, relarguant ainsi du phosphore inorganique ;
- en conditions aérobies, les produits de fermentation stockés sont utilisés pour la production d'énergie et la croissance desdites bactéries. L'énergie utilisée est également utilisée pour reconstituer le stock de polyphosphates en réabsorbant le phosphore inorganique puisé dans le milieu. Le stock de polyphosphates augmente avec la croissance des bactéries PAO.

La réabsorption du phosphore inorganique en conditions aérobies est plus importante que ce qui avait été relargué en conditions anaérobies/anoxies. Ainsi par succession de conditions anaérobies/anoxies et de conditions aérobies, on peut obtenir une accumulation progressive du phosphore sous forme de polyphosphates dans ces micro-organismes jusqu'à des valeurs pouvant atteindre 10 % de leur poids sec.

Tout ce processus conduit à assurer une élimination du phosphore de l'ordre de 50 à 65 % dans les eaux résiduaires à traiter.

Cette alternance de conditions/phases anaérobies/anoxies et aérobies présente un intérêt dans tous les autres cas d'élimination de pollutions carbonées et azotées, comme vu précédemment : elle permet de réguler l'élimination du carbone organique nécessaire à toutes les étapes du traitement ainsi que la prolifération des micro-organismes responsables de son élimination ; elle apporte l'oxygène nécessaire à la nitrification tout en permettant ensuite la dénitrification en phase anaérobie et/ou anoxies ; elle renforce l'accumulation du phosphore dans les micro-organismes en phase aérobie.

Le traitement biologique de l'eau dans un réacteur dédié doit être réalisé en soumettant la biomasse à des conditions anaérobies et/ou anoxies et aérobies, permettant à la fois de réaliser la déphosphatation, la nitrification et la dénitrification.

Le traitement biologique de l'eau peut être réalisé dans un réacteur de type continu. Dans ce cas, les conditions anaérobies/anoxies et aérobies sont réalisées grâce à des zones anaérobies/anoxies et aérobies formelles.

Le traitement biologique de l'eau peut alternativement être réalisé dans un réacteur en batch, ou mode séquencé. Les traitements biologiques séquencés de l'eau consistent à mettre l'eau à traiter en contact avec de la boue logée dans un réacteur, et généralement fluidisée. Ce type de réacteur est dénommé SBR pour Sequenced Batch Reactor en langue anglaise. Dans ce cas, les conditions anaérobies/anoxies et aérobies ne sont pas réalisées grâce à des zones anaérobies/anoxies et aérobies formelles, mais grâce à des successions de phases anaérobies/anoxies et de phase aérobies.

L'eau traitée, c'est-à-dire appauvrie en pollution carbonée, azotée et/ou phosphorée, doit ensuite être séparée de la boue pour être récupérée, et parfois subir des traitements complémentaires dits traitements tertiaires

Le plus souvent, la séparation de l'eau traitée et des boues est réalisée par décantation de la boue au fond du réacteur.

Toutefois, la boue se trouve dans l'eau sous la forme de particules de tailles différentes, et notamment de petites particules faiblement décantables ayant généralement un diamètre inférieur à un dixième de millimètre. Il en résulte que leur décantation est lente, ce qui implique que le temps nécessaire au traitement biologique de l'eau est relativement long.

Pour pallier cet inconvénient, il est préférable de ne conserver dans le réacteur de traitement de l'eau résiduaire qu'une sélection de granules de boue. On parle également de boues granuleuses. Les granules de boue sont des particules définies comme étant une communauté d'espèces microbiennes agrégées entre elles et compactes de taille généralement comprise entre 0,1 et 5 mm et ayant des propriétés de décantation nettement plus rapide qu'une boue activée classique. Leur densité est généralement comprise entre 1,02 et 1,10 kg/l.

La vitesse de décantation des boues granuleuses en question est d'au moins 10 m/h par opposition à environ 1 m/h pour la boue floculante. Ainsi, les granules de boue, plus volumineuses et plus lourdes que d'autres particules de boues, présentent une meilleure capacité à décanter.

Or, comme évoqué en introduction, les boues sont issues d'eaux résiduaires déjà traitées et les micro-organismes qui les constituent sont issus de phénomènes complexes et difficilement maitrisables, générant des particules floculées de différentes tailles et présentant des caractéristiques variées de tailles très différentes, notamment sous forme de filaments. Seules des conditions spécifiques permettent d'obtenir des granules.

Il faut donc pouvoir sélectionner des particules plus aptes à décanter, et éliminer les particules moins aptes à décanter : on parle de sélection des particules de boues.

La sélection peut être soit réalisée à l'extérieur du réacteur, soit sein du réacteur de traitement de l'eau.

Dans le brevet WO2016004082, le traitement biologique est réalisé en mode continu avec des étapes de sélection en continu des particules (aussi nommées granules) de biomasse, soit sur le flux de biomasse sortant du réacteur, soit par prélèvement de la biomasse dans la zone aérobie du réacteur. Une condition d'une mise en œuvre efficace de ce procédé est de disposer d'une zone anaérobie et/ou anoxie formelle au sein du réacteur comprenant une matière organique dégradable adéquate sous la forme d'acétate, ou d'acide gras. Selon le ratio entre les acides gras ou l'acétate disponibles dans le milieu et le phosphore à extraire, les PAO sont capables d'absorber tout le phosphate libéré dans la zone anaérobie et d'extraire du phosphate supplémentaire présent dans les eaux résiduaires, ce qui permet d'éliminer nettement le phosphate par l'extraction finale de la biomasse chargée en phosphate.

Les systèmes de sélection de granules sont externes au réacteur : il peut s'agir de sélecteurs gravimétriques pour séparer les agrégats de boues les plus denses (hydrocyclone, centrifugeuse, dispositif de décantation de gravité externe ...) ou de sélecteurs de taille pour séparer les agrégats de boues les plus gros (écran, filtre, dispositif à membrane).

Ces systèmes visent à sélectionner les granules plus denses et/ou plus gros, et à sortir du procédé les autres particules de boue par exemple les filaments et les flocons légers. Ces procédés et systèmes nécessitent des dispositifs volumineux et coûteux, qui ne peuvent pas ou difficilement être utilisés au sein même du réacteur de traitement mettant en contact l'eau à traiter avec les granules ou les particules de boue.

Les brevets CN103848497 (DHV) et WO2004024638 (TU Delft), décrivent des procédés, notamment un procédé commercialisé sous le nom NEREDA^{®} dans lequel les réactions prennent place dans un réacteur de type SBR. Le volume même de la granule de boue comprend une phase aérobie extérieure et une phase anaérobie intérieure. Ainsi, la demande de brevet WO2004024638 divulgue un réacteur séquentiel discontinu de type SBR dans lequel un lit de granules de biomasse est logé. Dans une première étape, l'eau résiduaire à traiter est introduite par le fond du réacteur dans des conditions anaérobies. Le débit d'alimentation en eau du réacteur est choisi de manière à ce que l'alimentation soit lente. On évite ainsi la formation d'un lit fluidisé de granules de biomasse. Quand l'alimentation du réacteur en eau à traiter est achevée, une phase de latence non agitée est observée dans le réacteur au cours de laquelle l'eau à traiter est laissée au contact des granules de biomasse. Au cours de cette phase, les substrats nutritifs présents dans l'eau sont assimilés par la biomasse dont les granules voient leur volume et leur densité croître en conséquence, favorisant notamment le développement de PAO (Organismes Accumulateurs de Phosphore).

Une deuxième étape consiste à aérer le réacteur au moyen d'une rampe prévue dans sa partie inférieure du réacteur. La pollution azotée contenue dans l'eau à traiter est alors dégradée au moins en partie par nitrification-dénitrification. Le développement des PAO et l'extraction des phosphates sont également permis. Au cours d'une troisième étape, les granules sont extraites puis une décantation est mise en œuvre au sein du réacteur avant d'en extraire de l'eau traitée appauvrie en pollution azotée. La technique décrite dans ce document permet de réduire la concentration de l'eau en pollution azotée, mais également phosphorée.

Il est évoqué une étape de sélection entre les granules selon leur aptitude à décanter, mais il n'est pas spécifié comment.

La demande de brevet WO2012175489 de Veolia décrit un procédé similaire à celui du brevet TU Delft, avec un réacteur de type SBR, qui comprend en outre une étape anaérobie d'agitation et de formation d'un lit fluidisé de granules de biomasse. Un processus d'extraction des granules peu décantées ou des particules fines se produit après plusieurs cycles. L'extraction est réalisée par un système fixe qui est aussi utilisé pour la collecte de l'eau traitée et qui permet une extraction à partir de la surface de l'eau traitée. Un tel système réalise une extraction des granules de boue de mauvaise décantation par lessivage en partie supérieure du réacteur. Le problème est que le circuit de récupération de l'eau traitée et celui de l'extraction comprennent une partie commune. Ainsi l'eau traitée peut contenir des boues, en particulier des particules de boue de faibles diamètres, ce qui entraîne une faible qualité de l'eau traitée et impose des traitements ultérieurs coûteux et longs (par exemple filtration, flottation, clarification qui peuvent également nécessiter l'ajout de produits chimiques comme des coagulants et agents floculant).

La demande de brevet WO2009050347 de Degremont décrit un réacteur SBR configuré en deux compartiments, le premier comprenant un lit de particules de boue et le second comprenant l'eau à traiter, laquelle est évacuée vers le premier compartiment sous contrainte hydraulique (générée par des séquences de dépression/remise à la pression atmosphérique). Cela induit un mouvement sur le lit de particules, qui ainsi est pulsé et expansé. Une zone de concentration comprenant un obturateur et située dans le second compartiment permet de récupérer les boues non agglomérées grâce à l'ouverture de l'obturateur effectuée lors de la remise en suspension les boues non décantées. Ceci correspond à la phase d'admission de l'eau dans le second compartiment. Cette zone de récupération est fixe, et se situe au fond du compartiment. Dans cette demande de brevet, la sélection et l'extraction des particules de boue de mauvaise décantation sont réalisées par récupération en partie inférieure du compartiment du réacteur, et surtout à un niveau fixe de celui-ci. Cela présente l'inconvénient soit d'extraire des particules de boue de bonne capacité de décantation, soit de ne pas extraire toutes les boues de mauvaise capacité de décantation, générant une extraction d'un mélange de qualités de boue variées, avec la nécessité d'avoir des étapes de sélection ultérieures entre les particules de boue selon leur aptitude à décanter. Pour limiter cet inconvénient, il faudrait réaliser de nombreux et longs cycles de traitement/récupération, sans certitude d'extraire uniquement les mauvaises boues.

La demande de brevet WO2007089141 divulgue un procédé pour la purification d'eaux résiduaires, utilisant implicitement un réacteur de type SBR, et dans lequel les eaux résiduaires sont introduites par le bas de réacteur pour être mises en contact avec des particules de boues contenant des micro-organismes, ensuite un gaz contenant de l'oxygène est injecté sous les particules de boues, et enfin les particules de boues se décantent. Les particules ayant une mauvaise capacité de décantation sont extraites du réacteur par un point de prise situé à une hauteur fixe du réacteur, par exemple entre 50 et 98% de la hauteur du réacteur.

Le système d'extraction évoqué dans la demande de brevet ci- dessus est difficile à adapter à la variation des conditions de fonctionnement des systèmes de traitement (charges, flux, concentration en solides, température). Cet inconvénient se retrouve dans toutes les demandes citées. Il est ainsi difficile de maîtriser une bonne séparation des particules afin d'obtenir des particules ayant une aptitude à décanter souhaitée.

Le brevet US 5 490 920 A décrit une unité de sédimentation connue de l'état de la technique.

Ainsi, l'objectif principal de l'invention est de pouvoir sélectionner et extraire les particules de boue selon leur aptitude à décanter au sein d'un réacteur de traitement de l'eau, de manière plus précise, et sans les inconvénients des systèmes de l'état de la technique cités.

### EXPOSE DE L'INVENTION

A cet effet, l'invention a pour objet un réacteur de traitement biologique des eaux résiduaires comprenant :
- une enceinte apte à contenir un mélange eaux résiduaires-boues comprenant différents niveaux, chaque niveau étant défini par une concentration et/ou une densité de boues ;
- des moyens de détermination d'un niveau minimum et d'un niveau maximum d'extraction des boues dans l'enceinte, lesdits moyens de détermination étant adaptés pour exclure l'extraction des boues comprenant des particules de charbon actif ou des boues comprenant des précipités de struvite, lesdits moyens de détermination comprenant :
   - des moyens de mesure aptes à mesurer la concentration et/ou la densité de boues à différents niveaux d'un mélange eaux résiduaires-boues ;
   - des moyens de sélection aptes à sélectionner une valeur de concentration et/ou de densité de boues maximum et une valeur de concentration et/ou de densité de boues minimum où les moyens (12) de sélection sont aptes à sélectionner une valeur de concentration et/ou de densité de boues maximum se situant juste au-dessus du niveau de boues contenant des particules de charbon actif ou des précipités de struvite;
   - des moyens de déduction apte à déduire un niveau minimum d'extraction correspondant à la valeur de concentration maximum sélectionnée et un niveau maximum d'extraction correspondant à la valeur de concentration minimum sélectionnée ;
- des moyens d'extraction aptes à extraire des boues à des niveaux variables entre le niveau d'extraction minimum et le niveau d'extraction maximum.

Ainsi, l'invention consiste en un réacteur de traitement biologique d'eaux résiduaires comprenant un dispositif d'extraction sélective des boues.

La sélection des boues à extraire est réalisée par les moyens de détermination de niveaux d'extraction en fonction de caractéristiques des boues présentes à ces niveaux. Certains de ces moyens de détermination sont décrits ci-après. Le principe de la sélection est basé sur la détermination d'un niveau minimum et d'un niveau maximum d'extraction des boues, ces niveaux étant déterminés par la mesure de la concentration et/ou de la densité des boues à extraire. Cela permet donc de réaliser une extraction sélective selon l'aptitude à décanter des boues de manière plus précise et plus ciblée que les dispositifs de l'art antérieur, ladite aptitude des boues à décanter étant liée à la concentration et/ou à la densité des boues.

L'extraction est effectuée par des moyens d'extraction, dont certains sont décrits ci-après, et qui permettent de réaliser une extraction des boues entre un niveau minimum et un niveau maximum d'extraction.

Les moyens d'extraction des boues présentent des moyens aptes à faire varier le niveau d'extraction desdites boues.

Les moyens de détermination des niveaux minimum et maximum d'extraction sont associés aux moyens d'extraction, ce qui permet de réaliser une extraction sélective au sein même du réacteur, c'est-à-dire sans avoir à ajouter des dispositifs volumineux, coûteux et dont la plupart ne peuvent pas être utilisés au sein même du réacteur de traitement et nécessitent donc des circuits et/ou des enceintes supplémentaires.

Ainsi le dispositif selon l'invention permet d'extraire plus sûrement et plus précisément des boues présentant une faible aptitude à décanter, et de conserver celles ayant une meilleure aptitude à décanter

Un des avantages de l'invention est donc de disposer de moyens d'extraction des boues ayant une faible aptitude à décanter, qui permettent de réaliser leur extraction au sein du réacteur de traitement, qui soit suffisamment précis pour éviter d'avoir à réaliser une étape ultérieure et extérieure au réacteur de séparation de l'eau traitée et de la boue, et/ou une étape ultérieure et extérieure au réacteur de sélection entre les différentes particules de boues.

Ainsi, un autre avantage de l'invention de l'invention est de ne conserver dans le réacteur que des particules (ou granules) de boue denses. En effet, certaines de ces granules présentent un meilleur gradient de concentration de substrat et d'accepteur d'électrons entre le centre (anaérobie) et la périphérie (aérobie/anoxie) de la granule ; ce gradient permet de faire croître le centre anaérobie de sorte que plus d'organismes tels que les PAO puissent y être logés. Cela permet ainsi que des procédés tels que l'élimination biologique du phosphore puissent être réalisés efficacement sans qu'il y ait besoin de zones sélectives aérobies, anaérobies et/ou anoxies ou de séquences temporelles aérobies, anaérobies et/ou anoxies.

Un autre avantage de l'invention est d'améliorer la performance du traitement et le dimensionnement des procédés de traitements tertiaires (filtration, clarification ...) qui suivent parfois l'étape de traitement biologique de l'eau et qui dépendent fortement de cette capacité des boues à décanter et de la vitesse de décantation associée.

Un autre avantage est, en extrayant du réacteur des particules de boue présentant une faible aptitude à décanter, de pouvoir concevoir des réacteurs de plus petit volume.

Enfin, un autre avantage est de permettre l'extraction des matières flottantes dans l'eau (écume, graisse, boues flottantes, mousses ...) pour éviter leur accumulation et les problèmes inhérents. Par exemple, l'extracteur peut être disposé de manière à ce que l'extraction s'opère juste en dessous du niveau libre ou sur le niveau libre de l'eau dans le réacteur.

Selon un mode de réalisation avantageux, le réacteur de traitement biologique comprend en outre des moyens de recyclage aptes à recycler dans l'enceinte des boues extraites. Cela permet d'améliorer la sélection, en réitérant le procédé d'extraction sélective plusieurs fois.

### Moyens d'extraction des boues

Selon un mode de réalisation, les moyens d'extraction comprennent :
- un extracteur comprenant au moins une première partie présentant au moins une ouverture à l'intérieur de l'enceinte et une seconde partie apte à faire sortir les boues en dehors de l'enceinte ;
- des moyens de variation aptes à faire varier la position de l'ouverture dudit extracteur, en particulier le niveau de l'ouverture entre le niveau d'extraction minimum et le niveau d'extraction maximum.

Par « ouverture » il faut comprendre « au moins une ouverture » pour l'ensemble de la présente description.

Selon un mode de réalisation, la seconde partie de l'extracteur comprend en outre un passage étanche au niveau d'une des parois de l'enceinte, de manière à faire sortir les boues de l'enceinte du réacteur.

Selon un mode de réalisation, l'extracteur comprend une pompe et les moyens de variation comprennent des moyens pour faire varier le niveau de la pompe dans l'enceinte. L'ouverture de la première partie de l'extracteur correspond à l'entrée de la pompe, autrement dit l'admission de la pompe. La seconde partie de l'extracteur est reliée à la sortie de la pompe, autrement dit au refoulement de la pompe, ce qui permet de récupérer les boues en dehors de l'enceinte.

Un tel système est simple à mettre en œuvre et permet de faire varier le niveau d'extraction de manière continue.

Alternativement, l'extracteur peut comprendre une pompe ou tout autre moyen disposé à l'extérieur de l'enceinte et apte à faire sortir les boues en dehors de l'enceinte du réacteur.

Par rapport à la solution précédente, la pompe est située à l'extérieur de l'enceinte. Ainsi la pompe n'occupe pas de volume dans l'enceinte. Par exemple, elle ne vient pas perturber les réactions qui ont lieu dans le réacteur. C'est également un avantage en termes de nettoyage et de maintenance de la pompe, celle-ci n'étant pas en contact direct avec l'eau à traiter et les boues.

Selon un mode de réalisation, l'extracteur comprend un tube dont une première extrémité présente une ouverture à l'intérieur de l'enceinte, et dont une seconde extrémité est reliée à la seconde partie de l'extracteur, et les moyens de variation comprennent des moyens pour déplacer ledit tube de part et d'autre de sa seconde extrémité de manière à modifier la position de la première extrémité dudit tube.

Un tel système est très simple à mettre en œuvre.

Selon un mode de réalisation, l'extracteur comprend un tuyau flexible dont une première extrémité présente une ouverture à l'intérieur de l'enceinte, et dont une seconde extrémité est reliée à la seconde partie de l'extracteur, et les moyens de variation comprennent des moyens pour déplacer la première extrémité dudit tuyau flexible.

Un tel système est simple à mettre en œuvre, et d'une bonne adaptabilité puisque c'est non seulement la hauteur de l'ouverture qui est variable, mais c'est aussi la distance entre la première extrémité et la paroi de l'enceinte qui peut être adaptée. Par exemple, il est possible d'aller récupérer les boues au niveau de la paroi de l'enceinte, notamment au niveau de la paroi où sont fixés les moyens d'extraction.

Selon un mode de réalisation particulier, les moyens pour déplacer la première extrémité du tuyau flexible comprennent une pièce raccordée à ladite première extrémité dudit tuyau flexible, ladite pièce étant apte à coopérer avec une vis de sorte que, lorsque la vis est actionnée, ladite pièce est animée d'un mouvement vertical le long de ladite vis.

Cela permet de commander facilement, rapidement et par exemple à distance la première extrémité du tuyau.

La pièce peut être un plateau ou un disque. Elle peut coulisser à l'intérieur d'un cylindre par exemple.

Selon un autre mode de réalisation, l'extracteur comprend un réservoir relié à la seconde partie de l'extracteur et présentant une fente à l'intérieur de l'enceinte, et comprend une porte présentant une ouverture en regard de ladite fente, le réservoir et la porte étant assemblés de telle manière qu'aucun fluide ne puisse circuler entre eux, et les moyens de variation comprennent des moyens pour déplacer la porte selon un mouvement sensiblement vertical.

Dans ce cas, les moyens de variation comprennent donc des moyens pour déplacer la porte. La porte peut être déplacée facilement, rapidement et à distance la porte. Cela nécessite par exemple un mouvement de translation verticale de la porte, et soit un débattement vertical important au dessus du réacteur, soit l'ajout de moyens mécaniques adaptés pour transformer un mouvement horizontal ou rotatif en ledit mouvement de translation vertical

Selon un autre mode de réalisation, l'extracteur comprend un premier tube cylindrique présentant une fente sensiblement rectiligne à l'intérieur de l'enceinte et un second tube cylindrique présentant une fente sensiblement hélicoïdale à l'intérieur de l'enceinte, un des tubes cylindriques étant positionné à l'intérieur de l'autre et étant relié à la seconde partie de l'extracteur, les premier et second tubes étant assemblés de telle manière à ce qu'aucun fluide ne puisse circuler entre eux, et les moyens de variation comprennent des moyens pour faire tourner un des tubes par rapport à l'autre.

Ces moyens de variation permettent de commander facilement, rapidement et à distance l'ouverture entre les deux tubes cylindriques qui correspond à l'intersection entre les deux fentes. Cela correspond également à l'ouverture de la première partie de l'extracteur. Les moyens de variation doivent réaliser un mouvement rotatif de l'un des tubes et ne nécessitent donc pas de débattement vertical au dessus du réacteur. Enfin, il peut permettre de réaliser une rotation fine et donc une variation fine du niveau d'extraction.

L'ensemble des moyens d'extraction décrits précédemment permet de faire varier le niveau d'extraction de manière continue.

Selon un autre mode de réalisation, l'extracteur comprend un ensemble de tubes disposés à différents niveaux dans l'enceinte, chaque tube comprenant une première extrémité présentant une ouverture à l'intérieur de l'enceinte et une seconde extrémité reliée à la seconde partie de l'extracteur, et les moyens de variation comprennent un ensemble de vannes aptes à ouvrir ou fermer lesdits tubes. Dans ce système, il n'est pas nécessaire d'appliquer des mouvements et/ou des déplacements à un tout ou partie dudit extracteur. Il suffit de commander l'ouverture d'une ou de plusieurs vannes. Ces moyens d'extraction permettent de faire varier le niveau d'extraction de manière discrète et non continue.

Les moyens d'extraction présentés sont assez divers et ils sont tous assez aisément intégrables dans un réacteur existant. L'avantage est qu'ils peuvent être choisis en fonction du réacteur, de son enceinte et/ou de l'environnement.

### Moyens de détermination des niveaux d'extraction

Selon un mode de réalisation, les moyens de mesure comprennent des moyens d'émission aptes à émettre un signal dans un mélange eaux résiduaires-boues et des moyens de réception aptes à recevoir, depuis le signal émis, un signal ayant parcouru une distance donnée dans le mélange eaux résiduaires-boues. La technique d'émission/réception d'un signal est une technique non intrusive, facile à mettre en œuvre, qui délivre une information quasi-immédiatement et qui évite de réaliser un échantillonnage.

Selon un mode de réalisation particulier, le signal est une onde, les moyens d'émission et/ou les moyens de réception comprenant un capteur apte à être immergé en dessous de la surface d'un mélange eaux résiduaires-boues et apte à émettre une onde et/ou à recevoir une onde. Un seul capteur peut faire office d'émetteur et de récepteur.

Selon un mode de réalisation particulier, l'onde est une onde ultrasonore. La technique ultrasonore permet de fournir des informations précises et rapides, ce qui la rend particulièrement adaptée à l'invention. En outre, il n'est pas nécessaire de faire varier le niveau d'immersion de la sonde ultrasonore.

Selon un autre mode de réalisation particulier, le signal étant un rayonnement, les moyens d'émission comprenant une source de rayonnement et les moyens de réception comprennent un détecteur de rayonnement, ledit détecteur étant configuré de manière à recevoir depuis le rayonnement émis, un rayonnement ayant parcouru une distance donnée dans un mélange eaux résiduaires-boues.

Selon un mode de réalisation particulier, le réacteur de traitement biologique comprend en outre un conduit d'immersion.

Selon un mode de réalisation, la source de rayonnement (respectivement le détecteur de rayonnement) est disposé(e) dans le conduit d'immersion, et le détecteur de rayonnement (respectivement la source de rayonnement) est disposé(e) au niveau d'une paroi extérieure de l'enceinte.

Selon un autre mode de réalisation particulier, la source de rayonnement et le détecteur de rayonnement sont disposés au niveau d'une paroi extérieure de l'enceinte. Dans ce cas, on utilise la rétrodiffusion du signal, ce qui évite d'avoir à insérer un conduit d'immersion dans l'enceinte. En outre, pour réaliser des mesures à différents niveaux, il suffit de déplacer le seul capteur faisant office d'émetteur /récepteur.

Selon un mode de réalisation particulier, le rayonnement est un rayonnement gamma.

Selon un mode de réalisation, les moyens de mesure comprennent une sonde et des moyens d'immersion aptes à immerger la sonde à différents niveaux dans un mélange eaux résiduaires-boues de manière à mesurer la concentration des boues audits différents niveaux dans ledit mélange eaux résiduaires-boues. Cela permet de mesurer à différents niveaux une concentration et donc de relier une concentration avec un niveau.

Selon un mode de réalisation particulier, la sonde mesurant la concentration des boues comprennent un absorptiomètre optique.

L'invention a également pour objet un procédé de traitement biologique des eaux résiduaires dans un réacteur selon l'invention et comprenant les étapes suivantes :
- la détermination d'un niveau d'extraction minimum et d'un niveau d'extraction maximum des boues dans l'enceinte ;
- l'extraction des boues entre le niveau d'extraction minimum et le niveau d'extraction maximum.

Selon un mode de réalisation préférentiel, le procédé comprend une étape de décantation des boues.

Selon un mode de réalisation, le procédé comprend une étape d'introduction d'eaux résiduaires dans l'enceinte.

Selon un mode de réalisation, le procédé comprend une étape de traitement biologique d'eaux résiduaires par réaction avec les boues activées.

Selon un mode de réalisation, le procédé comprend également une étape de prélèvement de l'eau traitée à un niveau supérieur au niveau d'extraction maximum des boues.

Selon un mode de réalisation, l'étape de prélèvement de l'eau traitée est réalisée après l'étape d'introduction des eaux résiduaires dans l'enceinte et après l'étape de décantation des boues. Ce mode est adapté à un réacteur à niveau variable.

Selon un mode de réalisation, l'étape de prélèvement de l'eau traitée est réalisée simultanément à l'étape d'introduction des eaux résiduaires dans l'enceinte et après l'étape de décantation des boues. Ce mode est adapté à un réacteur à niveau fixe.

Selon un mode de réalisation, le procédé comprend une étape de recyclage dans le réacteur biologique des boues extraites. Cela permet d'améliorer la précision de la sélection, en réitérant le procédé d'extraction sélective plusieurs fois.

Selon un mode de réalisation particulier, le réacteur est un réacteur de type séquentiel et l'ensemble des étapes est répété au moins une fois. Cela permet également d'améliorer la précision de la sélection.

### DESCRIPTION DES FIGURES

L'invention sera mieux comprise et d'autres avantages apparaîtront à la lecture de la description détaillée de plusieurs modes de réalisation donnés à titre d'exemple, description illustrée par les figures jointes parmi lesquelles :
- la figure 1 illustre un exemple de réacteur selon l'invention ;
- les figures 2A à 2G illustrent plusieurs réacteurs selon plusieurs modes de réalisation de l'invention comprenant une sonde ultrasonore et différents moyens d'extraction ;
- les figures 3A et 3B illustrent deux réacteurs comprenant des systèmes comprenant une source et un détecteur de rayonnement gamma disposés selon deux modes différents ;
- les figures 4A à 4F illustrent un procédé selon un mode de réalisation de l'invention appliqué à un réacteur de type SBR à lit variable ;
- les figures 5A à 5F illustrent un procédé selon un autre mode de réalisation de l'invention appliqué à un réacteur de type SBR à lit fixe ;
- les figures 6A à 6F illustrent un procédé selon un mode de réalisation de l'invention appliqué à un réacteur de type continu ;
- la figure 7 montre un graphe représentant les hauteurs des boues selon leurs concentrations en fonction du temps de décantation, la concentration avant décantation étant de 4 g/L ;
- les figures 8A et 8B montrent des graphes de concentration de boues, ou matières en suspension (MES), dans le lit de boues après 110 minutes de décantation obtenues pour deux réacteurs différents R1 (Jougne) et R2 (Pithiviers).

### EXPOSÉ DÉTAILLÉ DE MODES DE RÉALISATION PARTICULIERS

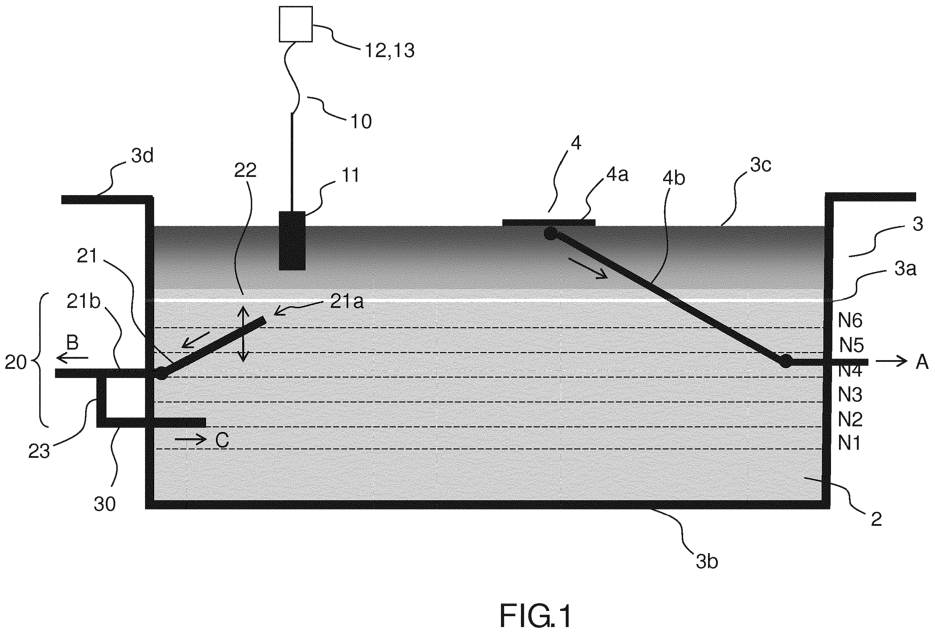

La figure 1 illustre un exemple de réacteur 1 selon l'invention. Le réacteur 1 comprend une enceinte 3. L'enceinte 3 comprend une ou des parois verticales 3a, une paroi de fond 3b, une ouverture 3c en partie supérieure et éventuellement des rebords 3d.

Lors du traitement des eaux résiduaires, l'enceinte 3 est remplie d'un mélange 2 eaux résiduaires-boues. Lorsque la boue a décanté, l'eau se trouve en partie haute de l'enceinte du réacteur. L'eau peut être soutirée via l'ouverture 3c de l'enceinte par un système de prélèvement 4 apte à prélever l'eau et comprenant une partie flottante 4a de sorte à ce que le système de prélèvement suive la surface libre de l'eau, et un tuyau immergé 4b relié à la partie flottante par lequel l'eau peut être aspirée et prélevée à l'extérieur de l'enceinte (flèche A).

Les particules de boues les plus lourdes et/ou denses se retrouvent au fond et elles peuvent être soutirées au niveau de la paroi de fond 3b de l'enceinte. Entre les deux, il y a le reste du mélange, qui se présente sous la forme d'une stratification, c'est-à-dire qui présente plusieurs niveaux N₁, N₂, N₃, N₄, N₅, N₆..., chaque niveau étant défini par une concentration et/ou une densité de boues dans le mélange 2.

Le réacteur 1 selon l'invention permet d'extraire de manière sélective les boues les moins aptes à décanter qui se retrouvent dans le mélange 2. Pour cela, le réacteur comprend des moyens 10 de détermination d'un niveau minimum et d'un niveau maximum d'extraction des boues dans l'enceinte comprenant des moyens de mesure 11, par exemple une sonde de mesure. Ladite sonde de mesure permet de mesurer la concentration et/ou la densité de boue dans le mélange. La sonde de mesure 11 peut être immergée dans le mélange comme illustré ou non immergée. Elle peut être à une profondeur d'immersion fixe ou variable selon le type de sonde choisi.

La sonde de mesure 11 est reliée à des moyens de sélection 12, qui permettent de vérifier si la mesure correspond à des boues à extraire ou non, et des moyens de déduction 13 qui permettent de relier la mesure au niveau correspondant. Ces moyens de détermination 10 sont reliés à des moyens d'extraction 20 des boues, plus particulièrement aux moyens de variation 22 du niveau d'extraction, principalement pour sélectionner le niveau d'extraction. Les moyens de variations 22 font varier le niveau de l'ouverture 21a de l'extracteur 21.

Le réacteur 1 selon l'invention comprend donc des moyens d'extraction 20 des boues dont le niveau d'extraction peut être varié.

Les boues extraites peuvent être soit évacuées (flèche B), soit recyclées dans le réacteur 1 (flèche C).

Le réacteur 1 peut comprendre des moyens de recyclage 30 des boues extraites dans l'enceinte 3.

Les moyens d'extractions 20 peuvent comprendre des moyens 23, qui permettent d'envoyer les boues extraites soit vers une évacuation, soit vers un recyclage dans le réacteur 1.

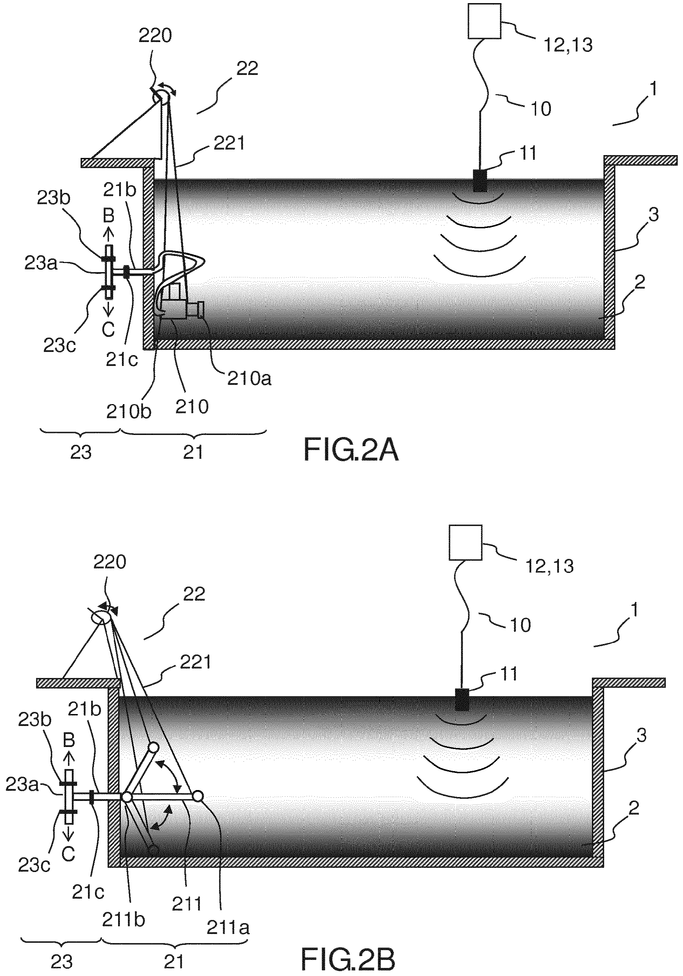

Les figures 2A à 2G illustrent plusieurs réacteurs 1 selon plusieurs modes de réalisation de l'invention comprenant une sonde ultrasonore et différents moyens d'extraction.

Dans l'ensemble des figures suivantes, l'extracteur 21 est en partie introduit dans l'enceinte 3, et en partie immergé dans le mélange 2 eaux résiduaires-boue.

Dans les modes de réalisation des figures 2A à 2G (non entièrement représenté pour 2F), l'extracteur 21 comprend une seconde partie 21b qui est confondue dans ce cas avec un circuit de sortie 21b, ledit circuit de sortie étant apte à faire sortir les boues à l'extérieur de l'enceinte 3.

Le circuit de sortie 21b peut comprendre au moins un tube fixe traversant de manière étanche une paroi de l'enceinte 3.

Il peut s'agir de tout autre moyen pour traverser la paroi. Il peut s'agir de la paroi verticale ou de la paroi de fond.

Plus largement, le circuit de sortie 21b peut comprendre un tuyau et/ou d'un tube ou de tout autre moyen apte à faire passer les boues à l'extérieur de l'enceinte 3. Il peut s'agir de moyens qui ne nécessitent pas d'avoir à traverser une paroi verticale ou la paroi de fond de ladite enceinte, par exemple en utilisant l'ouverture 3c de l'enceinte.

En outre, les moyens d'extraction 20 peuvent comprendre un système trois voies 23 comprenant un tube 23a muni de deux vannes 23b et 23c (ou d'une vanne trois voies) de manière à orienter les boues extraites soit vers une évacuation B du réacteur, soit vers un recyclage C des boues dans le réacteur. Le système trois voies 23 est connecté au circuit de sortie 21b.

En outre, le circuit de sortie 21b peut comprendre une vanne 21c. Par exemple, la vanne peut permettre de gérer l'ouverture ou la fermeture entre le circuit de sortie 21b et le système trois voies 23.

Dans le mode illustré en figure 2A, l'extracteur 21 comprend une pompe 210 qui est introduite dans l'enceinte 3 et immergée dans le mélange 2, et des moyens de variation 22 aptes à faire varier le niveau de la pompe 210 dans l'enceinte. Il peut s'agir par exemple d'un treuil 220 permettant de commander l'enroulement et le déroulement d'un câble, d'une chaîne ou de tout autre type de filin 221 relié à la pompe.

Le niveau d'extraction des boues correspond au niveau de la pompe dans l'enceinte et plus particulièrement au niveau de l'ouverture 210a (de l'admission) de la pompe dans l'enceinte. La sortie 210b (le refoulement) de la pompe est reliée au circuit de sortie 21b de manière à faire sortir les boues pompées à l'extérieur de l'enceinte 3.

Selon la figure 2A, le circuit de sortie 21b comprend une partie en tuyau flexible et une partie en tube fixe traversant une paroi de l'enceinte 3.

Dans les modes de réalisation illustrés en figures 2B à 2G, les moyens d'extraction 20 peuvent peut comprendre une pompe ou tout autre moyen pour faire sortir les boues à l'extérieur de l'enceinte 3.

Dans le mode illustré en figure 2B, l'extracteur 21 comprend un tube 211 dont une première extrémité 211a présente une ouverture dans l'enceinte 3 et une seconde extrémité 211b est reliée au circuit de sortie 21b. Le tube 211 est rigide et il peut se déplacer autour de sa seconde extrémité 211b qui forme une articulation. Les moyens de commande 22 comprennent par exemple un treuil 220 permettant de commander l'enroulement et le déroulement d'un câble, d'une chaîne ou de tout autre type de filin 221 relié à la première extrémité 211a dudit tube. De cette manière, on fait varier le niveau de la première extrémité 211a, par conséquent le niveau de l'ouverture dudit tube et au final le niveau d'extraction des boues.

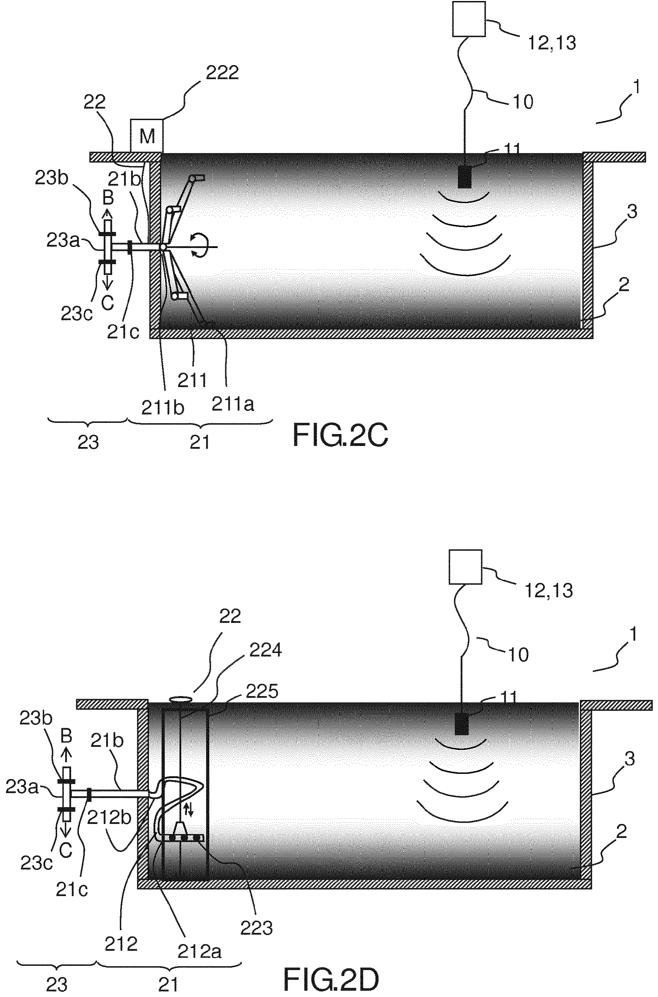

Le mode illustré en figure 2C se différencie de celui de la figure 2B en ce que le tube 211 peut présenter une longueur variable, par exemple il peut être télescopique, et en ce que les moyens de commande 22 comprennent un moteur 222 fonctionnant en rotation et apte à faire tourner le tube 211 autour de sa seconde extrémité 211b. De cette manière, on fait varier le niveau de la première extrémité 211a, par conséquent le niveau de l'ouverture dudit tube et au final le niveau le niveau d'extraction des boues.

Dans le mode illustré en figure 2D, l'extracteur 21 comprend un tuyau flexible 212 dont une première extrémité 212a présente une ouverture dans l'enceinte 3 et une seconde extrémité 212b est reliée au circuit de sortie 21b. La première extrémité 212a est raccordée à une pièce 223, ladite pièce coopérant avec une vis 224, par exemple une vis dans fin. Ainsi, lorsque la vis 224 est actionnée, la pièce 223 est animée d'un mouvement vertical le long de ladite vis. De cette manière, on fait varier le niveau de la première extrémité 212a, par conséquent le niveau de l'ouverture dudit tuyau et au final le niveau d'extraction des boues.

La pièce 223 peut être un disque, un plateau. Dans l'exemple représenté, elle coulisse à l'intérieur d'un cylindre 225. La vis 224 peut être actionnée manuellement ou avec l'aide d'un moteur fonctionnant par exemple en rotation (non représenté).

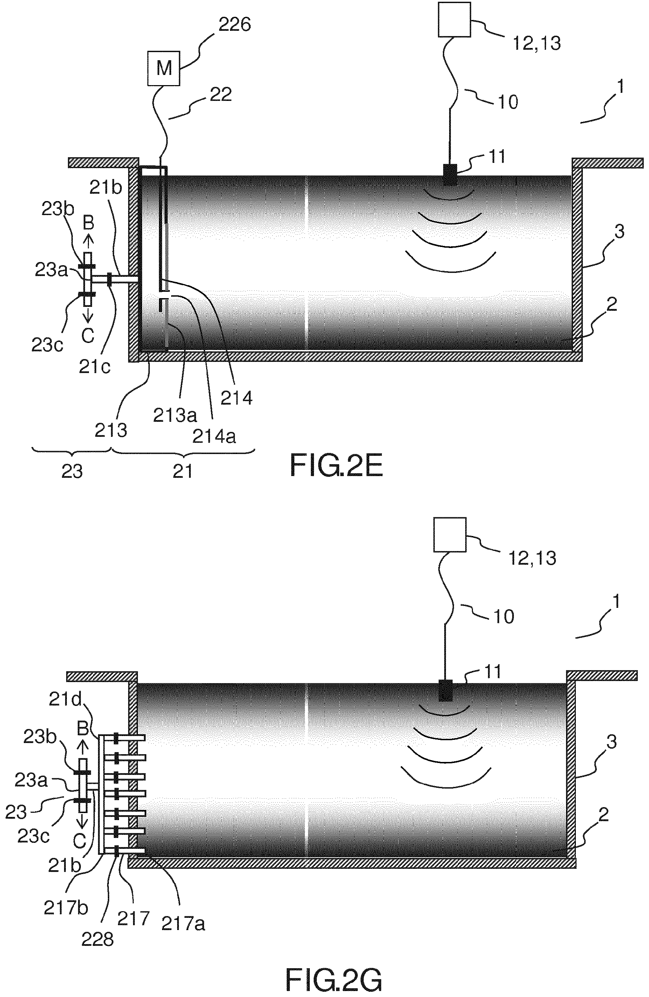

Dans le mode illustré en figure 2E, l'extracteur 21 comprend un réservoir 213 connecté au circuit de sortie 21b et dont une paroi présente une fente 213a, et une porte 214 présentant une ouverture 214a disposée en regard de la fente rectiligne 213a. La porte 214 coulisse le long de la paroi intérieure (ou alternativement le long de la paroi extérieure) du réservoir présentant ladite fente, et ce d'une manière étanche : en effet, aucune boue et aucun liquide ne doit circuler entre la porte 214 et la paroi intérieure du réservoir 213. Les moyens de variation 22 comprennent un moteur 226 fonctionnant en translation, et relié à la porte 214 de sorte soumettre ladite porte à un mouvement sensiblement vertical. De cette manière, on fait varier le niveau de l'ouverture 214a de la porte, qui est située en vis-à-vis de la fente 213a du réservoir, par conséquent on fait varier le niveau d'extraction des boues dans le réservoir 213 puis à l'extérieur de l'enceinte 3 via le circuit de sortie 21a.

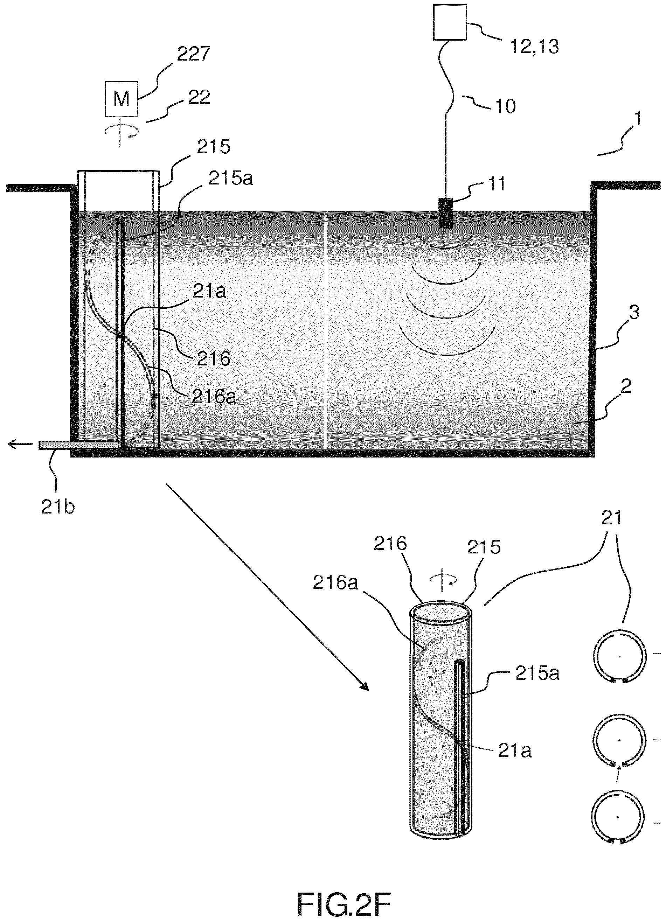

Dans le mode illustré en figure 2F, l'extracteur 21 comprend un premier tube cylindrique 215 présentant une fente rectiligne 215a et un second tube cylindrique 216 présentant une fente sensiblement hélicoïdale 216a, un des tubes cylindriques étant positionné à l'intérieur de l'autre, les premier et second tubes étant assemblés de telle manière qu'aucun fluide ne puisse circuler entre les deux tubes, le tube intérieur étant relié au circuit de sortie 21b. Les moyens de variation 22 comprennent un moteur 227 apte à faire tourner un des tubes par rapport à l'autre. Le passage des boues s'effectue au niveau de l'intersection de la fente rectiligne 215a et de la fente hélicoïdale 216a. De cette manière, on fait varier le niveau de l'ouverture 21a correspondant à ladite intersection, par conséquent on fait varier le niveau d'extraction des boues dans le tube intérieur puis à l'extérieur de l'enceinte 3 via le circuit de sortie 21b.

Dans le mode illustré en figure 2G, les moyens d'extraction comprennent un ensemble de tubes 217 disposés à différents niveaux dans l'enceinte 3 et traversant au moins une paroi verticale de ladite enceinte. Chaque tube présente une première extrémité 217a ouverte dans l'enceinte 3 et une seconde extrémité 217b reliée à un collecteur 21d. Le collecteur 21d est relié au circuit de sortie 21b. Les moyens de commande 22 comprennent un ensemble de vannes 228 aptes à ouvrir ou fermer lesdits tubes.

Dans cette figure, le collecteur 21d et les vannes 228 sont situés à l'extérieur du l'enceinte, ce qui nécessite d'avoir plusieurs traversées dans l'enceinte.

Avantageusement, le collecteur 21d peut être disposé dans l'enceinte 3, ce qui évite d'avoir plusieurs traversées dans l'enceinte (avec les risques de fuites associés).

Une ou plusieurs vannes 228 peuvent être disposées dans l'enceinte 3.

Alternativement, la liaison entre les tubes 217 et le collecteur 21d peut passer par l'ouverture supérieure de l'enceinte 3, sans avoir à traverser une paroi verticale ou la paroi de fond de ladite enceinte.

Dans les modes illustrés en figures 2B à 2G, il est parfois nécessaire de prévoir une pompe ou tout autre moyen pour attirer ou aspirer les boues à l'extérieur du réacteur.

Dans les modes illustrés en figures 2A à 2G, les moyens de mesure 11 des moyens de détermination 10 comprennent un capteur ultrasonore immergé en dessous de la surface d'un mélange eaux résiduaires-boues. Le capteur ultrasonore permet d'envoyer une onde ultrasonore dans ledit mélange (il fonctionne alors comme émetteur) puis à recevoir une onde ultrasonore en retour après avoir parcouru une distance donnée dans le mélange eaux résiduaires-boues (il fonctionne alors comme récepteur). Le capteur est relié aux moyens de sélection 12 et aux moyens de déduction 13.

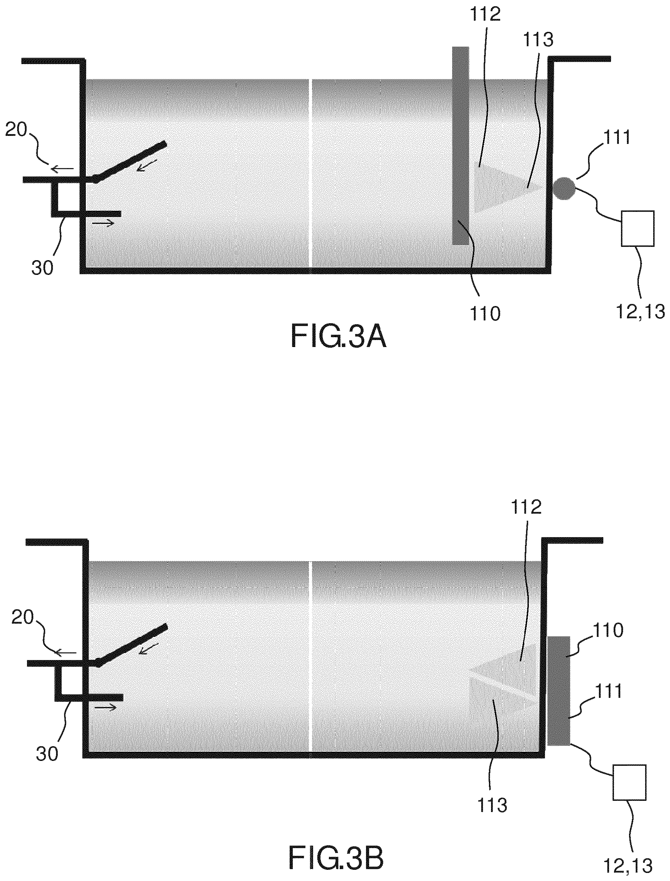

Les figures 3A et 3B illustrent un réacteur selon d'autres modes de réalisation de l'invention comprenant d'autres moyens de mesure 11. Sont représentés par ailleurs très schématiquement les moyens d'extraction 20 qui peuvent être un des moyens illustrés précédemment, ainsi que les moyens de recyclage 30.

Dans les modes illustrés en figures 3A et 3B, les moyens de mesure 11 aptes à mesurer la concentration et/ou la densité de boues comprennent un système comprenant une source 110 de rayonnement gamma et un détecteur 111 de rayonnement gamma, autrement dit un système de gammamétrie. Le détecteur 111 de rayonnement gamma étant configuré de manière à recevoir depuis le rayonnement gamma émis 112, un rayonnement gamma 113 ayant parcouru une distance donnée dans le mélange 2 eaux résiduaires-boues.

Dans le mode illustré en figure 3A, le réacteur 1 comprend un conduit d'immersion 5 introduit en partie dans l'enceinte 3, et dans l'exemple représenté immergé dans le mélange 2. Une source 110 de rayonnement est disposée dans ledit conduit d'immersion. Le détecteur 111 de rayonnement est disposé contre une paroi à l'extérieur de l'enceinte 3, par exemple une paroi verticale. Le détecteur 111 est relié aux moyens de sélection 12 et aux moyens de déduction 13.

Dans le mode illustré en figure 3B, la source 110 de rayonnement et le détecteur 111 de rayonnement sont disposés contre une paroi à l'extérieur de l'enceinte 3, par exemple une paroi verticale. Dans ce cas, le système fonctionne en rétrodiffusion. Le détecteur 111 est relié aux moyens de sélection 12 et aux moyens de déduction 13.

Alternativement, au lieu d'une sonde ultrasonore ou un système de gammamétrie, une sonde optique peut être mise en place pour mesurer la turbidimétrie à des niveaux différents.

Tous les modes de réalisation décrits ci-dessus peuvent être combinés entre eux.

Le réacteur décrit en relation avec les figures précédentes peut être un réacteur à batch de type SBR ou un réacteur de type continu ou tout autre réacteur de traitement d'effluents.

Un procédé de traitement biologique des eaux résiduaires comprend en général tout ou partie des phases suivantes, que nous nommerons :
- phase FILL : admission des eaux usées dans le réacteur ;
- phase REACT : élimination biologique de la pollution (organique, azote et phosphore) ; comprend les phases d'aération et éventuellement des phases anaérobie et anoxie ;
- phase SETTLE : séparation des boues et de l'eau traitée par décantation des boues ;
- phase DRAW : retrait de l'eau traitée.

Le procédé d'extraction sélective comprend préférentiellement une phase SETTLE dans lequel les boues dans le réservoir peuvent de décanter. Selon le type de réacteur (continu, SBR, pulsé ou non, mélangé ou non ...), cela correspond à un arrêt ou une réduction de l'agitation hydraulique et/ou mécanique du mélange eaux résiduaires-boues, à un arrêt ou une réduction de l'injection de gaz de fluidisation et/ou de gaz d'aération... Les particules ayant une forte aptitude à décanter atteignent les couches inférieures des boues, tandis que les particules ayant une faible aptitude à décanter demeurent dans les parties supérieures des boues.

Après un temps suffisant pour que la décantation se fasse (par exemple un temps compris entre 0,1 à 4 heures), les niveaux d'extraction minimum et du niveau d'extraction maximum sont déterminés. L'extracteur extrait les boues à un premier niveau d'extraction, compris entre le niveau d'extraction minimum et le niveau d'extraction maximum pendant le temps nécessaire pour extraire la quantité de boues souhaitée Puis l'extracteur prélève les boues à un second niveau d'extraction, compris entre le niveau d'extraction minimum et le niveau d'extraction maximum.

Les opérations de modification du niveau d'extraction puis d'extraction des boues sont réitérées plusieurs fois.

Avantageusement, pour améliorer la sélection, le flux de boues extraites peut être recyclé dans l'enceinte. La sélection est en effet améliorée dans ce cas en réitérant le procédé d'extraction sélective plusieurs fois.

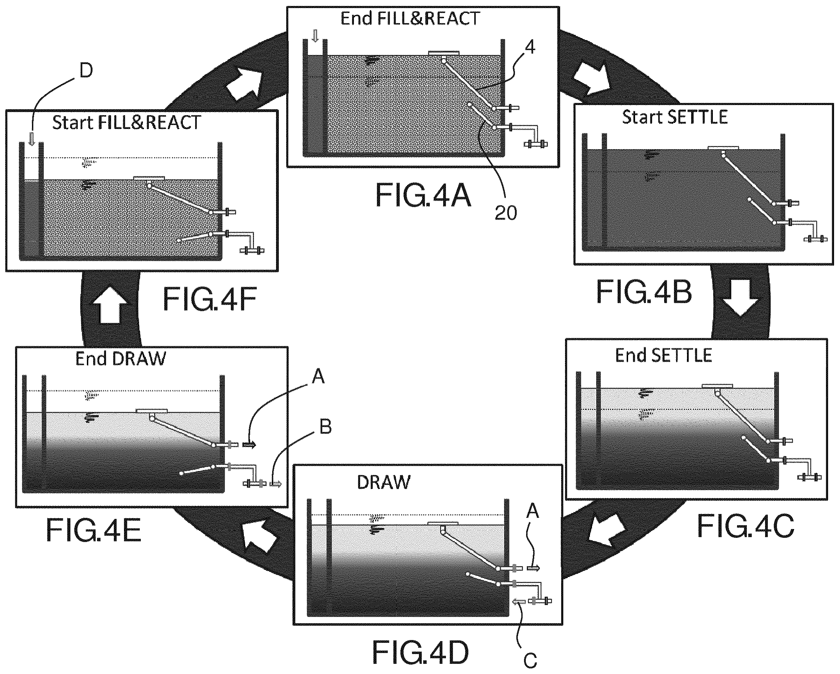

A titre d'exemples, les figures 4A à 4F, 5A à 5F et 6A à 6F présentent trois types de cycles de procédé pouvant être appliqués dans des types de réacteurs différents.

Un procédé selon l'invention appliqué à un réacteur de type SBR à niveau variable est représenté en figures 4A à 4F.

Le réacteur représenté comprend deux compartiments : un premier compartiment anaérobie/anoxie dit sélecteur par lequel les eaux usées sont injectées avec des boues qui proviennent d'une recirculation en provenance d'un second compartiment dit zone principale.

Le cycle de traitement de l'eau se compose de phases FILL et REACT, REACT, SETTLE et DRAW d'environ 30 minutes chacune. L'eau traitée est évacuée au niveau supérieur du réacteur (Fig 4D flèche A) à l'aide d'un système de prélèvement 4. La hauteur maximale du liquide dans le réacteur est d'environ six mètres et l'extracteur 21 à niveau variable est présent.

À la fin ou en cours de la phase SETTLE, l'extraction sélective est réalisée à plusieurs niveaux variables, entre le niveau inférieur et le niveau supérieur d'extraction. Le niveau d'extraction est variable. Au cours de la première partie d'extraction (pendant par exemple quinze minutes), les boues extraites sont soit recyclées dans l'enceinte (Fig 4D flèche C), soit évacuées (Fig 4E flèche B), afin d'éliminer les particules de faible décantation.

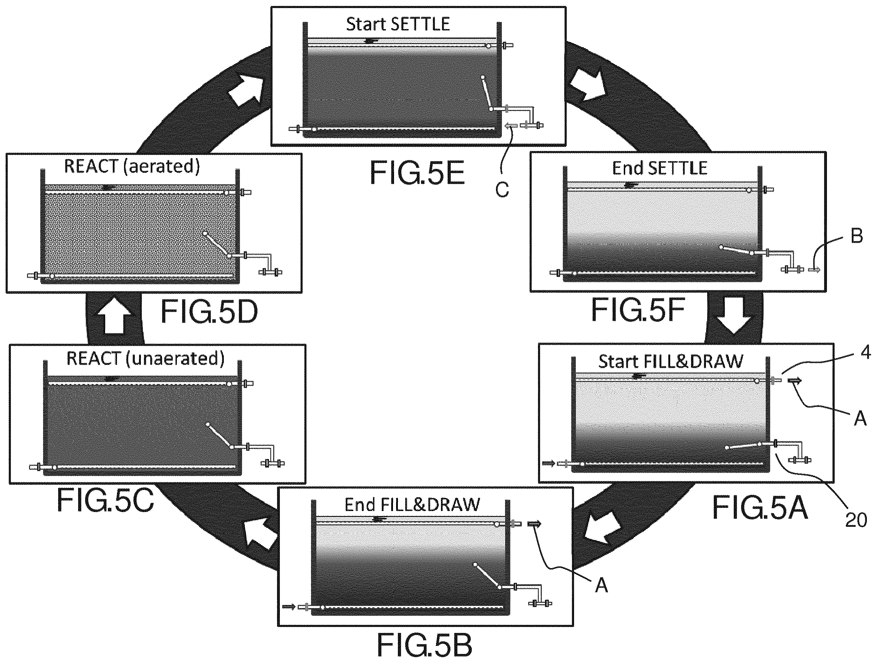

Un procédé selon l'invention appliqué à un réacteur de type SBR à niveau fixe est représenté en figures 5A à 5F.

Pour conserver un niveau fixe, les phases FILL et DRAW se produisent simultanément. Les eaux résiduaires sont introduites par le bas de l'enceinte (dans des conditions anoxiques ou anaérobies). L'eau traitée est évacuée au niveau supérieur du réacteur (Fig 5A flèche A) à l'aide d'un système de prélèvement 4.

Ensuite, la phase REACT où l'aération et/ou le mélange du réacteur se produit et permet de traiter l'eau résiduaire.

L'extraction sélective est réalisée, à l'aide des moyens d'extraction 20, à plusieurs niveaux variables, entre le niveau inférieur et le niveau supérieur d'extraction, pendant la dernière partie de la période SETTLE et/ou pendant la prochaine phase FILL et DRAW. Au cours de la première partie d'extraction (pendant par exemple quinze minutes), les boues extraites sont soit recyclées dans l'enceinte (Fig 5E flèche C), soit évacuées (Fig 5F flèche B), afin d'éliminer les particules de faible décantation.

Dans les deux procédés de type SBR présentés, il se produit une sélection progressive de particules de décantation rapide, sur plusieurs cycles réitérés.

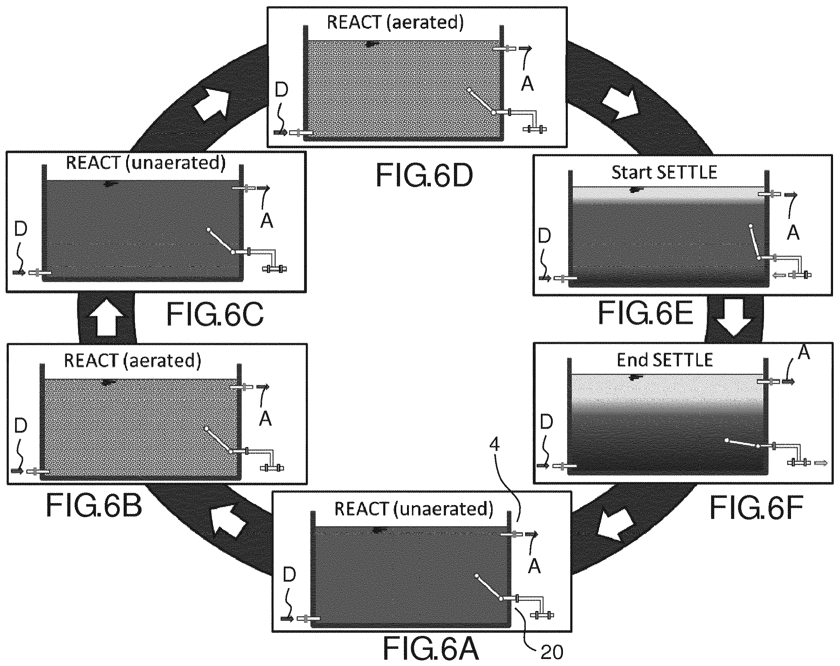

Un procédé selon l'invention appliqué à un réacteur de traitement classique à flux continu est représenté en figures 6A à 6F (par exemple : boues activées conventionnelles (CAS), boues activées à film fixe intégré (IFAS), ou réacteur biologique membranaire (MBR)). Dans ces cas, il n'y a pas de phase ou de compartiment pendant ou dans laquelle la boue peut de déposer librement et statiquement. Il y en a continu une entrée d'eaux résiduaires ou de mélange eaux- boues (flèches D), et une sortie d'eau traitée (flèches A) à l'aide d'un système de prélèvement 4. Le réservoir d'aération peut être aéré de façon intermittente ou uniquement aéré ou uniquement mélangé.

Dans le procédé selon l'invention, le mélange et/ou l'aération du réservoir d'aération sont arrêtés pendant une à deux heures, ce qui permet à la boue de décanter au fond dudit réservoir après une période, variant par exemple entre 0,1 à 4 heures (phase SETTLE).

L'extraction sélective est réalisée, à l'aide des moyens d'extraction 20, à plusieurs niveaux, variables entre le niveau inférieur et le niveau supérieur d'extraction, afin d'évacuer sélectivement les particules de plus faible décantation (Fig 6E : flèche C pour le recyclage des boues dans le réacteur et Fig 6F : flèche B pour l'évacuation des boues). Pendant la phase d'extraction, la hauteur de l'extraction peut être adaptée.

Dans tous les modes présentés, les moyens d'extraction 20 peuvent également permettre d'extraire du réacteur des matières flottantes dans l'eau (écume, graisse, boues flottantes, mousses ...) pour éviter leur accumulation et les problèmes inhérents et ce, non seulement pendant la phase de décantation, mais également pendant les autres phases. Les moyens d'extraction peuvent être disposés de manière à ce que d'extraction s'opère juste en dessous du niveau libre ou sur le niveau libre de l'eau dans le réacteur.

En outre, un (ou des) étape(s) d'extraction classique des boues au fond du réacteur et/ou de recyclage des boues peut être exécutée(s) en parallèle du procédé selon l'invention.

Le procédé fonctionnera d'autant mieux et/ou sera d'autant plus avantageux que les organismes sont susceptibles de se développer lentement dans la boue pour atteindre une structure densifiée, comme les organismes accumulateurs de phosphore (PAO), les bactéries dénitrifiantes, ou méthanogènes ..., ce qui renvoie à l'introduction du présent document.

En outre, les bactéries qui effectuent le processus dit Anammox, pour oxydation anaérobie de l'ammonium NH₄⁺, sont susceptibles de se développer dans des granules denses, la coprésence de l'ammoniac et du nitrite en l'absence d'oxygène favorisant leur développement. L'intérêt de ces bactéries est de permettre une oxydation de l'ammoniaque à moindre coût ainsi qu'une dénitrification moins consommatrice de matière organique.

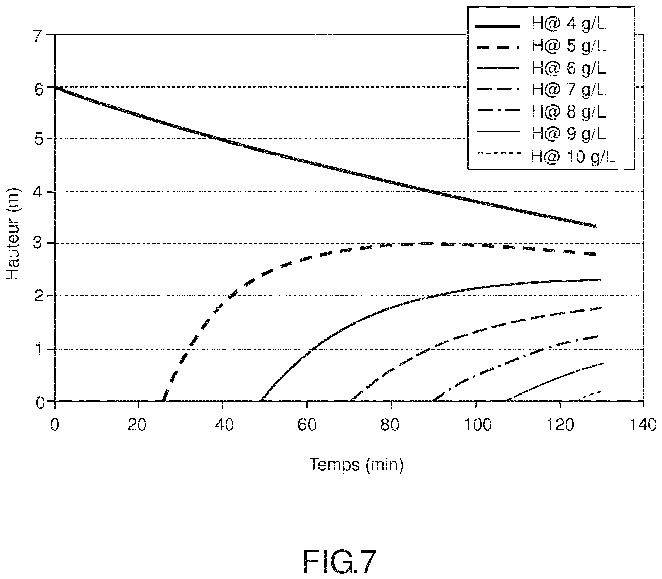

La figure 7 montre un graphe représentant les hauteurs des boues selon leurs concentrations en fonction du temps de décantation pour un réacteur donné, la concentration avant décantation étant de 4 g/L, l'extraction se faisant à une concentration supérieure (45 - 7 g/L par exemple).

Pour ce réacteur, on voit que le temps de décantation optimal pour extraire les boues est de 130 minutes. Les niveaux de concentration sont établis et il est possible de réaliser une extraction sélective efficace. Il est possible d'affiner la mesure de concentration pour affiner l'extraction.

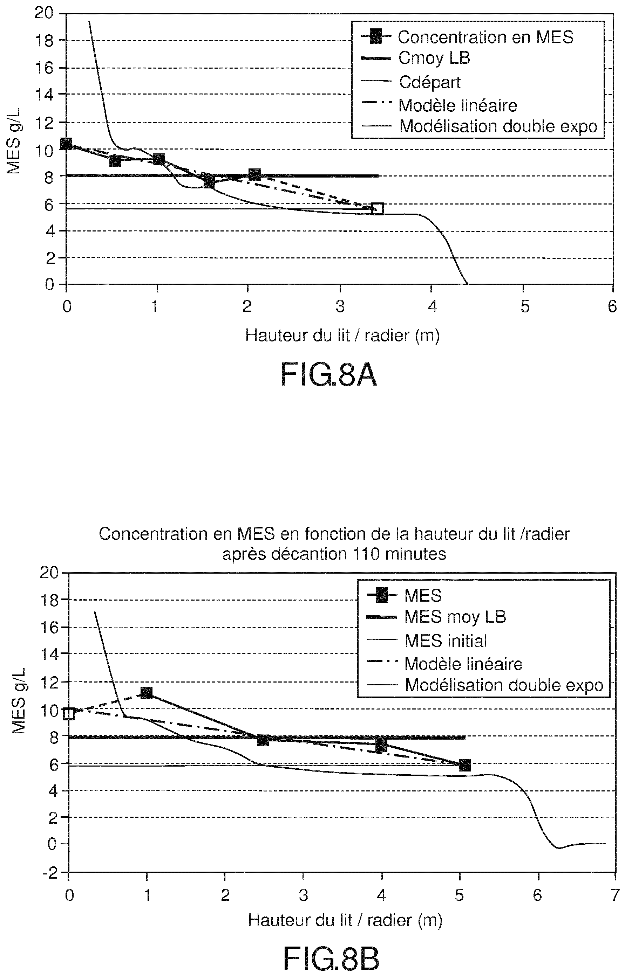

Les figures 8A et 8B montrent des graphes de concentration de boues, ou matières en suspension (MES), dans le lit de boues (LB) après 110 minutes de décantation obtenues pour deux réacteur différents R1 (à Jougne) et R2 (à Pithiviers).

Dans les deux cas, les mesures de concentration permettent d'obtenir un modèle linéaire par extrapolation de la concentration en fonction de la hauteur de lit. Ce modèle peut être utilisé dans les moyens de détermination 10 notamment les moyens de sélection 12, et ce, pour un réacteur donné.

Le réacteur et le procédé selon l'invention peuvent avantageusement être appliqués lorsque des particules plus denses sont additionnées dans les boues ou produites au sein desdites boues.

Par exemple, du charbon actif peut être additionné sous forme de particules denses dans les boues. Les particules de charbon actif peuvent en effet être utilisées pour l'adsorption de micropolluants, notamment des résidus médicamenteux dans l'eau résiduaire. Le réacteur et le procédé selon l'invention, en permettant l'extraction sélective des boues les moins denses et le maintien des boues les plus denses, favorisent le maintien du charbon actif plus longtemps dans le réacteur.

Selon un aspect de l'invention les moyens de détermination des niveaux d'extraction sont adaptés pour cibler plus précisément les particules de charbon actif : le niveau d'extraction minimum devra se situer juste en dessus du niveau de boues contenant des particules de charbon actif pour ne pas extraire le charbon actif avec les particules présentant une faible capacité à décanter. Le temps de séjour du charbon actif étant rallongé, la capacité d'adsorption peut être plus élevée et/ou la quantité de charbon actif à additionner aux boues réduite.

Un autre aspect de l'invention concerne l'obtention de précipités de struvite (NH₄MgPO₄). Les dépôts de struvite dans un réacteur de traitement des eaux peuvent engendrer une grande inefficacité de l'exploitation en raison de l'obstruction des tuyaux, pompes et autres équipements, mais la struvite est un autre moyen de valoriser les boues comme engrais agricole à assimilation lente. Il est préférable que la struvite, qui peut être formée quand les eaux usées contiennent de l'ammoniac, du magnésium et des phosphates dans des proportions molaires compatibles, demeure au fond du réacteur et soit récupérée pendant ou après le traitement des eaux résiduaires par le fond du réacteur. Le réacteur et le procédé selon l'invention favorise ce maintien des précipités de struvite dans le réacteur, lesdits précipités pouvant être récupérés lors d'étapes de soutirage et/ou traitement ultérieures (par exemple de séparation avec le reste des boues denses).

Les précipités de struvite peuvent également provenir d'un effluent de digesteur anaérobie, qui est transféré dans un réacteur selon l'invention. L'aération et/ou l'agitation mécanique ou hydraulique sont arrêtés après la phase REACT. La phase SETTLE permet que les précipités se déposent. L'extraction sélective permet de conserver les précipités de struvite dans le réacteur, de préférence au fond pour qu'ils puissent être soutirés et transférés dans un dispositif de déshydratation, pour fabriquer de l'engrais. Les moyens de détermination des niveaux d'extraction peuvent être adaptés pour cibler plus précisément les précipités de struvite : le niveau d'extraction minimum devra se situer juste en dessus du niveau de boues contenant de la struvite pour ne pas l'extraire avec les particules présentant une faible capacité à décanter.

## Revendications

1. Réacteur (1) de traitement biologique des eaux résiduaires comprenant :
- une enceinte (3) apte à contenir un mélange (2) eaux résiduaires-boues comprenant différents niveaux, chaque niveau étant défini par une concentration et/ou une densité de boues ;
- des moyens (10) de détermination d'un niveau minimum et d'un niveau maximum d'extraction des boues dans l'enceinte, lesdits moyens de détermination étant adaptés pour exclure l'extraction des boues comprenant des particules de charbon actif ou des boues comprenant des précipités de struvite, lesdits moyens de détermination comprenant :
• des moyens (11) de mesure aptes à mesurer la concentration et/ou la densité de boues à différents niveaux d'un mélange eaux résiduaires-boues
• des moyens (12) de sélection aptes à sélectionner une valeur de concentration et/ou de densité de boues maximum et une valeur de concentration et/ou de densité de boues minimum,
où les moyens (12) de sélection sont aptes à sélectionner une valeur de concentration et/ou de densité de boues maximum se situant juste au-dessus du niveau de boues contenant des particules de charbon actif ou des précipités de struvite;
• des moyens (13) de déduction apte à déduire un niveau minimum d'extraction correspondant à la valeur de concentration maximum sélectionnée et un niveau maximum d'extraction correspondant à la valeur de concentration minimum sélectionnée ;
- des moyens (20) d'extraction aptes à extraire des boues à des niveaux variables entre le niveau d'extraction minimum et le niveau d'extraction maximum.

2. Réacteur (1) selon la revendication 1, comprenant en outre des moyens (30) de recyclage aptes à recycler dans l'enceinte des boues extraites.

3. Réacteur (1) selon l'une des revendications 1 ou 2, les moyens d'extraction (20) comprenant :
- un extracteur (21) comprenant au moins une première partie présentant au moins une ouverture (21a) à l'intérieur de l'enceinte (3) et une seconde partie (21b) apte à faire sortir les boues en dehors de ladite enceinte ;
- des moyens de variation (22) aptes à faire varier la position de l'ouverture (21a) dudit extracteur (21), en particulier le niveau de ladite ouverture entre le niveau d'extraction minimum et le niveau d'extraction maximum.

4. Réacteur selon la revendication 3, l'extracteur (21) comprenant une pompe (210) et les moyens de variation (22) comprenant des moyens pour faire varier le niveau de la pompe dans l'enceinte.

5. Réacteur selon la revendication 3, l'extracteur (21) comprenant un tube (211) dont une première extrémité présente une ouverture (211a) dans l'enceinte (3) et dont une seconde extrémité (211b) est reliée à la seconde partie (21b) de l'extracteur (21), les moyens de variation (22) comprenant des moyens pour déplacer ledit tube de part et d'autre de sa seconde extrémité (211b) de manière à modifier la position de la première extrémité dudit tube.

6. Réacteur selon la revendication 3, l'extracteur (21) comprenant un tuyau flexible (212) dont une première extrémité présente une ouverture (212a) à l'intérieur de l'enceinte (3) et dont une seconde extrémité (212b) est reliée à la seconde extrémité de l'extracteur (21), les moyens de variation (22) comprenant des moyens pour déplacer la première extrémité dudit tuyau flexible.

7. Réacteur selon la revendication 6, les moyens pour déplacer la première extrémité (212a) du tuyau flexible (212) comprenant une pièce (223) raccordée à ladite première extrémité dudit tuyau flexible, ladite pièce étant apte à coopérer avec une vis (224) de sorte que, lorsque la vis (224) est actionnée, ladite pièce (223) est animée d'un mouvement vertical le long de ladite vis.

8. Réacteur selon la revendication 3, l'extracteur (21) comprenant un réservoir (213) relié à la seconde partie (21b) de l'extracteur (21) et présentant une fente (213a) à l'intérieur de l'enceinte et comprenant une porte (214) présentant une ouverture (214a) en regard de ladite fente (213a), le réservoir (213) et la porte (214) étant assemblés de telle manière qu'aucun fluide ne puisse circuler entre eux, et les moyens de variation (22) comprenant des moyens pour déplacer la porte selon un mouvement sensiblement vertical.

9. Réacteur selon la revendication 3, l'extracteur (21) comprenant un premier tube cylindrique (215) présentant une fente sensiblement rectiligne (215a) à l'intérieur de l'enceinte et un second tube cylindrique (216) présentant une fente sensiblement hélicoïdale (216a) à l'intérieur de l'enceinte, un des tubes cylindriques étant positionné à l'intérieur de l'autre et étant relié à la seconde partie (21b) de l'extracteur (21), les premier et second tubes étant assemblés de telle manière à ce qu'aucun fluide ne puisse circuler entre eux, les moyens de variation (22) comprenant des moyens pour faire tourner un des tubes par rapport à l'autre.

10. Réacteur selon la revendication 3, l'extracteur (21) comprenant un ensemble de tubes (217) disposés à différents niveaux dans l'enceinte, chaque tube (217) présentant une première extrémité (217a) présentant une ouverture à l'intérieur de l'enceinte (3) et une seconde extrémité (217b) reliée à la seconde partie (21b) de l'extracteur (21), les moyens de variation (22) comprenant un ensemble de vannes (228) aptes à ouvrir ou fermer lesdits tubes.

11. Procédé de traitement biologique des eaux résiduaires dans un réacteur selon l'une des revendications 1 à 10 et comprenant les étapes suivantes :
- la détermination d'un niveau d'extraction minimum et d'un niveau d'extraction maximum des boues dans l'enceinte ;
- l'extraction des boues entre le niveau d'extraction minimum et le niveau d'extraction maximum,
où le niveau d'extraction minimum est déterminé de sorte à exclure de l'extraction des boues comprenant des particules de charbon actif ou des boues comprenant des précipités de struvite.

## Patentansprüche

1. Reaktor (1) zur biologischen Behandlung von Abwasser, aufweisend:
- eine Anlage (3), die eingerichtet ist, ein Gemisch (2) aus Abwasser und Schlamm zu enthalten, das verschiedene Niveaus aufweist, wobei jedes Niveau durch eine Konzentration und/oder eine Dichte des Schlamms definiert ist;
- Mittel (10) zum Bestimmen eines minimalen Niveaus und eines maximalen Niveaus der Schlammextraktion in der Anlage, wobei die Bestimmungsmittel eingerichtet sind, die Extraktion von Schlämmen, die Aktivkohlepartikel aufweisen, oder von Schlämmen, die Struvit-Ausfällungen aufweisen, auszuschließen, wobei die Bestimmungsmittel aufweisen:
• Messmittel (11), die eingerichtet sind, die Konzentration und/oder die Dichte des Schlamms auf verschiedenen Niveaus eines AbwasserSchlamm-Gemischs zu messen.
• Auswahlmittel (12), die eingerichtet sind, einen Wert für die maximale Schlammkonzentration und/oder -dichte und einen Wert für die minimale Schlammkonzentration und/oder -dichte auszuwählen,
wobei die Auswahlmittel (12) eingerichtet sind, einen maximalen Schlammkonzentrations- und/oder -dichtewert auszuwählen, der gerade über dem Niveau des Schlamms liegt, der Aktivkohlepartikel oder Struvit-Ausfällungen enthält;
• eine Ableitungseinrichtung (13), die eingerichtet ist, ein minimales Extraktionsniveau, das dem ausgewählten maximalen Konzentrationswert entspricht, und ein maximales Extraktionsniveau, das dem ausgewählten minimalen Konzentrationswert entspricht, abzuleiten;
- Extraktionsmittel (20), die eingerichtet sind, Schlamm bei variablen Niveaus zwischen dem minimalen Extraktionsniveau und dem maximalen Extraktionsniveau zu extrahieren.

2. Reaktor (1) nach Anspruch 1, der ferner Rückführungsmittel (30) aufweist, die eingerichtet sind, abgezogenen Schlamm in die Anlage zurückzuführen.

3. Reaktor (1) nach einem der Ansprüche 1 oder 2, wobei die Extraktionsmittel (20) aufweisen:
- einen Extraktor (21), der mindestens einen ersten Teil mit mindestens einer Öffnung (21e) im Inneren der Anlage (3) und einen zweiten Teil (21b) aufweist, der eingerichtet ist, den Schlamm aus dem Behälter herauszuführen;
- Variationsmittel (22), die eingerichtet sind, die Position der Öffnung (21a) des Extraktors (21) zu variieren, insbesondere das Niveau der genannten Öffnung zwischen dem minimalen Extraktionsniveau und dem maximalen Extraktionsniveau.

4. Reaktor nach Anspruch 3, wobei der Extraktor (21) eine Pumpe (210) aufweist und die Variationsmittel (22) Mittel aufweisen, um den Pegel der Pumpe in der Anlage zu variieren.

5. Reaktor nach Anspruch 3, wobei der Extraktor (21) ein Rohr (211) aufweist, dessen erstes Ende eine Öffnung (211a) in der Anlage (3) aufweist und dessen zweites Ende (211b) mit dem zweiten Teil (21 b) des Extraktors (21) verbunden ist, wobei die Variationsmittel (22) Mittel aufweisen, um das Rohr auf beiden Seiten seines zweiten Endes (211b) zu verschieben, so dass die Position des ersten Endes des Rohrs verändert wird.

6. Reaktor nach Anspruch 3, wobei der Extraktor (21) einen flexiblen Schlauch (212) aufweist, dessen erstes Ende eine Öffnung (212a) in das Innere der Anlage (3) aufweist und dessen zweites Ende (212b) mit dem zweiten Ende des Extraktors (21) verbunden ist, wobei die Variationsmittel (22) Mittel zum Verschieben des ersten Endes des flexiblen Schlauchs aufweisen.

7. Reaktor nach Anspruch 6, wobei die Mittel zum Bewegen des ersten Endes (212a) des flexiblen Schlauchs (212) ein Teil (223) aufweisen, das mit dem ersten Ende des flexiblen Schlauchs verbunden ist, wobei das Teil eingerichtet ist, mit einer Schraube (224) zusammenzuwirken, so dass, wenn die Schraube (224) betätigt wird, das Teil (223) eine vertikale Bewegung entlang der Schraube durchführt.

8. Reaktor nach Anspruch 3, wobei der Extraktor (21) ein Reservoir (213) aufweist, der mit dem zweiten Teil (21b) des Extraktors (21) verbunden ist und einen Schlitz (213a) im Inneren der Anlage aufweist und eine Tür (214) mit einer Öffnung (214a) gegenüber dem Schlitz (213a) aufweist, wobei der Behälter (213) und die Tür (214) so zusammengebaut sind, dass kein Fluid zwischen ihnen fließen kann, und die Variationsmittel (22) Mittel aufweisen, um die Tür gemäß einer im Wesentlichen vertikalen Bewegung zu bewegen.

9. Reaktor nach Anspruch 3, wobei der Extraktor (21) ein erstes Zylinderrohr (215) mit einem im Wesentlichen geradlinigen Schlitz (215a) im Inneren der Anlage und ein zweites Zylinderrohr (216) mit einem im Wesentlichen spiralförmigen Schlitz (216a) im Inneren der Anlage aufweist, wobei eines der zylindrischen Rohre innerhalb des anderen positioniert und mit dem zweiten Teil (21b) des Extraktors (21) verbunden ist, wobei das erste und das zweite Rohr so zusammengebaut sind, dass kein Fluid zwischen ihnen fließen kann, wobei die Variationsmittel (22) eine Einrichtung zum Drehen eines der Rohre relativ zu dem anderen aufweisen.

10. Reaktor nach Anspruch 3, wobei der Extraktor (21) eine Gruppe von Rohren (217) aufweist, die auf verschiedenen Ebenen in der Anlage angeordnet sind, wobei jedes Rohr (217) ein erstes Ende (217a) mit einer Öffnung in das Innere der Anlage (3) und ein zweites Ende (217b) aufweist, das mit dem zweiten Teil (21b) des Extraktors (21) verbunden ist, wobei die Variationsmittel (22) eine Gruppe von Ventilen (228) aufweisen, die eingerichtet sind, die genannten Rohre zu öffnen oder zu schließen.

11. Verfahren zur biologischen Behandlung von Abwasser in einem Reaktor nach einem der Ansprüche 1 bis 10 und mit den folgenden Schritten:
- Bestimmen eines minimalen Extraktionsniveaus und eines maximalen Extraktionsniveaus des Schlamms in der Anlage;
- Extrahieren des Schlamms zwischen dem minimalen Extraktionsniveau und dem maximalen Extraktionsniveau, wobei das minimale Extraktionsniveau so bestimmt wird, dass Schlamm, der Aktivkohlepartikel enthält, oder Schlamm, der Struvit-Ausfällungen enthält, von der Extraktion ausgeschlossen wird.

## Claims

1. Biological wastewater treatment reactor (1) comprising:
- an enclosure (3) capable of containing a mixture (2) of waste water and sludge comprising different levels, each level being defined by a concentration and/or density of sludge;
- means (10) for determining a minimum and maximum level of sludge extraction in the enclosure, said means of determination being adapted to exclude the extraction of sludge comprising activated carbon particles or sludge comprising struvite precipitates, said means of determination comprising:
• measurement means (11) suitable for measuring the concentration and/or density of sludge at different levels of a wastewater-sludge mixture;
• selection means (12) capable of selecting a maximum sludge concentration and/or density value and a minimum sludge concentration and/or density value,
where the selection means (12) are capable of selecting a maximum sludge concentration and/or density value that is just above the level of sludge containing activated carbon particles or struvite precipitates;
• deduction means (13) capable of deducing a minimum level of extraction corresponding to the maximum concentration value selected and a maximum level of extraction corresponding to the minimum concentration value selected;
- extraction means (20) capable of extracting sludge at varying levels between the minimum and maximum extraction levels.

2. Reactor (1) according to claim 1, further comprising recycling means (30) capable of recycling the extracted sludge into the enclosure.

3. Reactor (1) according to one of claims 1 or 2, the extraction means (20) comprising:
- an extractor (21) comprising at least a first part having at least one opening (21a) inside the enclosure (3) and a second part (21b) capable of removing the sludge from said enclosure;
- variation means (22) capable of varying the position of the opening (21a) of said extractor (21), in particular the level of said opening between the minimum extraction level and the maximum extraction level.

4. Reactor according to claim 3, wherein the extractor (21) comprising a pump (210) and the variation means (22) comprising means for varying the level of the pump in the enclosure.

5. Reactor of claim 3, wherein the extractor (21) comprises a tube (211) the first end of which has an opening (211a) in the enclosure (3) and a second end (211b) of which is connected to the second part (21b) of the extractor (21), the variation means (22) comprising means for moving said tube on either side of its second end (211b) so as to change the position of the first end of said tube.

6. Reactor according to claim 3, wherein the extractor (21) comprises a flexible pipe (212) the first end of which has an opening (212a) inside the enclosure (3) and a second end (212b) of which is connected to the second end of the extractor (21), the variation means (22) comprising means for moving the first end of said flexible pipe.

7. Reactor according to claim 6, the means for moving the first end (212a) of the flexible hose (212) comprising a part (223) connected to said first end of said flexible hose, said part being capable of cooperating with a screw (224) such that, when the screw (224) is actuated, said part (223) is moved vertically along said screw.

8. Reactor according to claim 3, wherein the extractor (21) comprises a tank (213) connected to the second part (21b) of the extractor (21) and having a slot (213a) inside the enclosure and comprising a door (214) having an opening (214a) opposite said slot (213a), the tank (213) and the door (214) being assembled in such a way that no fluid can flow between them, and variation means (22) comprising means of moving the door in a substantially vertical motion.

9. Reactor according to claim 3, wherein the extractor (21) comprises a first cylindrical tube (215) having a substantially straight slit (215a) inside the enclosure and a second cylindrical tube (216) having a substantially helical slit (216a) inside the enclosure, one of the cylindrical tubes being positioned inside the other and connected to the second part (21b) of the extractor (21), the first and second tubes being assembled in such a way that no fluid can circulate between them, the variation means (22) comprising means for rotating one of the tubes in relation to the other.

10. Reactor according to claim 3, wherein the extractor (21) comprises a set of tubes (217) arranged at different levels in the enclosure, each tube (217) having a first end (217a) having an opening inside the enclosure (3) and a second end (217b) connected to the second part (21b) of the extractor (21), the variation means (22) comprising a set of valves (228) capable of opening or closing said tubes.

11. Method for the biological treatment of waste water in a reactor according to any one of claims 1 to 10 and comprising the following steps:
- the determination of a minimum extraction level and a maximum extraction level of sludge in the enclosure;
- the extraction of sludge between the minimum extraction level and the maximum extraction level,
where the minimum extraction level is determined so as to exclude from extraction sludge containing activated carbon particles or sludge containing struvite precipitates.
